# EUROPEAN PATENT APPLICATION

(11) **EP 4 307 820 A1**
(43) Date of publication of application: **17.01.2024**
(21) Application number: 22766358.0
(22) Date of filing: 10.03.2022
(51) Int. Cl.: H04W 74/08

(54) **COT DETERMINATION METHOD, UPLINK TRANSMISSION METHOD AND DEVICE**

(30) Priority: 12.03.2021 CN 202110272111
(71) Applicant: Vivo Mobile Communication Co., Ltd., Dongguan, Guangdong 523863 (CN)
(72) Inventor: JIANG, Lei, Dongguan, Guangdong 523863 (CN); PAN, Xueming, Dongguan, Guangdong 523863 (CN)
(74) Representative: Murgitroyd & Company
(86) International application number: PCT/CN2022/080143
(87) International publication number: WO 2022/188836

(57) **Abstract**

The embodiment of the present application discloses a COT determination method, an uplink transmission method, and a device. The COT determination method includes: determining, by a terminal according to first information, whether a first COT used by a network side device is initiated by the network side device; and if the first COT is initiated by the network side device, sharing the first COT for uplink transmission.

## Description

### CROSS-REFERENCE TO RELATED APPLICATION

The present invention claims priority to Chinese Patent Application No. 202110272111.8, filed with the China National Intellectual Property Administration on March 12, 2021, and entitled "COT DETERMINATION METHOD, UPLINK TRANSMISSION METHOD AND DEVICE", which is incorporated herein by reference in its entirety.

### TECHNICAL FIELD

The present application belongs to the field of communication technology, and specifically relates to a channel occupancy time (Channel Occupancy Time, COT) determination method, an uplink transmission method and a device, where the device may include a COT determination apparatus, an uplink transmission apparatus, a terminal, and the like.

### BACKGROUND

An unlicensed frequency band is shared by multiple radio access technologies (RATs). Therefore, the unlicensed frequency band must comply with some rules when being used, for example, listen before talk (Listen Before Talk, LBT) and maximum channel occupancy time (Maximum Channel Occupancy Time, MCOT), etc. to ensure that all communication nodes can use the resource fairly.

In release-17 (Rel-17), since the terminal can initiate a COT and share the COT with a network side device, thus when the terminal detects any downlink signal, it cannot determine whether the downlink signal is sent in a COT initiated by the network side device, or sent in a shared COT initiated by another terminal. In this case, the terminal cannot determine whether it can share the COT used by the network side device, to transmit uplink transmission, which affects communication efficiency.

### SUMMARY

Embodiments of the present application provide a COT determination method, an uplink transmission method, and a device, which can solve the problem that the terminal cannot determine whether a first COT used by a network side device can be shared for uplink transmission, which affects communication efficiency.

According to a first aspect, a COT determination method is provided, including: determining, by a terminal according to first information, whether a first COT used by a network side device is initiated by the network side device; and if the first COT is initiated by the network side device, sharing the first COT for uplink transmission.

According to a second aspect, an uplink transmission method is provided, including: receiving, by a terminal, uplink grant signaling, where the uplink grant signaling is sent by a network side device in a second COT, the uplink grant signaling is used for scheduling an uplink resource, the uplink resource is not in the second COT, and the uplink grant signaling includes a COT sharing indicator; and performing, by the terminal, uplink transmission on the uplink resource.

According to a third aspect, a COT determination apparatus is provided, including: a determination module, configured to determine, according to first information, whether a first COT used by a network side device is initiated by the network side device; and a transmission module, configured to: if the first COT is initiated by the network side device, share the first COT for uplink transmission.

According to a fourth aspect, an uplink transmission apparatus is provided, including: a transmission module, configured to receive uplink grant signaling, where the uplink grant signaling is sent by a network side device in a second COT, the uplink grant signaling is used for scheduling an uplink resource, the uplink resource is not in the second COT, and the uplink grant signaling includes a COT sharing indicator; and the transmission module is further configured to perform uplink transmission on the uplink resource.

According to a fifth aspect, a terminal is provided. The terminal includes a processor, a memory, and a program or an instruction that is stored in the memory and that can run on the processor, where when the processor or the instruction is executed by the processor, the method in the first aspect or the second aspect is implemented.

According to a sixth aspect, a readable storage medium is provided, where the readable storage medium stores a program or an instruction, and when the program or the instruction is executed by a processor, the method according to the first aspect or the second aspect is implemented.

According to a seventh aspect, a computer program product is provided. The computer program product includes a processor, a memory, and a program or an instruction that is stored in the memory and that can run on the processor, where when the processor or the instruction is executed by the processor, the method in the first aspect or the second aspect is implemented.

According to an eighth aspect, a chip is provided. The chip includes a processor and a communications interface, the communications interface is coupled to the processor, and the processor is configured to run a program or an instruction, to implement the method according to the first aspect, or the method according to the second aspect.

In this embodiment of the present application, the terminal determines, according to the first information, whether the first COT used by the network side device is initiated by the network side device; if it is determined that the first COT is initiated by the network side device, the terminal shares the first COT for uplink transmission to improve communication efficiency.

### BRIEF DESCRIPTION OF DRAWINGS

FIG. 1 is a schematic diagram of a wireless communications system according to an embodiment of this application;
FIG. 2 is a schematic flowchart of a COT determination method according to an embodiment of the present application;
FIG. 3 is a schematic flowchart of an uplink transmission method according to an embodiment of the present application;
FIG. 4 is a schematic diagram of an uplink transmission method according to an embodiment of the present application;
FIG. 5 is a schematic structural diagram of a COT determination apparatus according to an embodiment of the present application;
FIG. 6 is a schematic structural diagram of an uplink transmission apparatus according to an embodiment of the present application;
FIG. 7 is a schematic diagram of a structure of a communications device according to an embodiment of this application; and
FIG. 8 is a schematic structural diagram of a terminal according to an embodiment of the present application.

### DESCRIPTION OF EMBODIMENTS

The following clearly describes the technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects, and do not need to be used to describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. A new radio (New Radio, NR) system is described below for an illustration purpose, and the term NR is used in most of the descriptions, although these technologies can also be used in an application other than an NR system application, for example, a 6th generation (6th Generation, 6G) communications system.

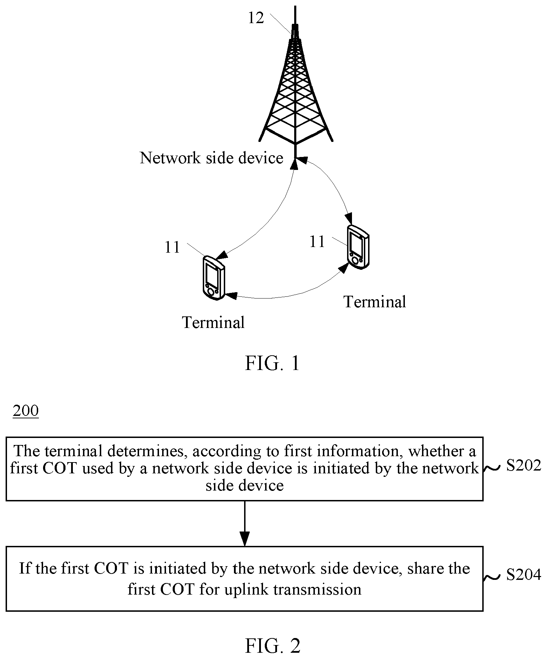

FIG. 1 is a schematic diagram of a wireless communications system to which an embodiment of this application can be applied. The wireless communications system includes a terminal 11 and a network side device 12. The terminal 11 may also be called a terminal device or user equipment (UE), and the terminal 11 may be a mobile phone, a tablet computer (Tablet Computer), a laptop computer (Laptop Computer) or a notebook computer, a personal digital Assistant (PDA), a palmtop computer, a netbook, an ultra-mobile personal computer (UMPC), a mobile Internet device (MID), a wearable device (Wearable Device) or a vehicle-mounted device (VUE), a pedestrian terminal (PUE), and other terminal side devices. The wearable device includes: bracelets, earphones, glasses, etc. It should be noted that a specific type of the terminal 11 is not limited in this embodiment of this application. The network side device 12 may be an M station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next generation NodeB (gNB), a home NodeB, a home evolved NodeB, a WLAN access point, a Wi-Fi node, a transmission reception point (Transmission Reception Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The following is a detailed explanation of the channel occupancy time (Channel Occupancy Time, COT) determination method, uplink transmission method, and device provided in the present application embodiment through specific embodiments and application scenarios combined with the accompanying drawings.

As shown in FIG. 2, the embodiment of the present application provides a COT determination method 200, which can be executed by a terminal, in other words, the method can be executed by software or hardware installed in the terminal, and the method includes the following steps.

S202: A terminal determines, according to first information, whether a first COT used by a network side device is initiated by the network side device.

Optionally, the first information includes at least one of the following: dedicated signaling (dedicated signaling), and a downlink channel or signal.

For the first COT used by the network side device mentioned in this embodiment, for example, the network side device sends a channel or signal to the terminal in the first COT, and the channel or signal may include the first information, and may also include information other than the first information.

In this embodiment, the terminal determines whether the first COT is initiated by the network side device. The purpose may be to determine whether the first COT can be shared for uplink transmission. Generally, the terminal can share the COT initiated by the network side device, but cannot share a COT shared by the network side device which initiated by other terminals.

Optionally, step S202 in the embodiment of the present application is implemented by at least one of the following implementation manners, or can be replaced by at least one of the following implementation manners:
1) The terminal determines, according to the first information, whether the first COT used by the network side device can be shared.
2) The terminal determines, according to the first information, whether the first COT used by the network side device is a COT initiated by other terminals and shared by the network side device.
3) The terminal determines, according to the first information, whether there is a first COT initiated by the network side device (gNB-initiated COT).
4) The terminal determines the initiator of the first COT according to the first information. If the initiator is the network side device, the first COT can be shared; if the initiator is another terminal, the first COT is not shared.
5) The terminal determines, according to the first information, whether the first COT is initiated by another terminal, and if yes, does not share the first COT; otherwise, can share the first COT.

In an example, the first information includes dedicated signaling, and the dedicated signaling can be used to indicate whether the first COT is initiated by the network side device, or indicate whether the terminal can share the first COT. In this way, in S202, the terminal may determine, according to indication of the dedicated signaling, whether the first COT is initiated by the network side device.

In another example, the first information includes a downlink channel or signal. In this example, if the terminal receives the downlink channel or signal at the first COT, it considers that the first COT is initiated by the network side device and can share the first COT; otherwise, if the terminal does not receive the downlink channel or signal, it considers that there is no COT initiated by the network side device and can end the process.

In yet another example, the first information includes dedicated signaling and a downlink channel or signal. The dedicated signaling may be used to indicate that the first COT is not initiated by the network side device. In this way, 1) if the terminal receives a downlink channel or signal and does not receive dedicated signaling, it is determined that the first COT is initiated by the network side device; 2) if the terminal receives a downlink channel or signal and receives dedicated signaling, then it is determined that the first COT is not initiated by the network side device, where the dedicated signaling can be carried in the received downlink channel or signal, or in other downlink channels or signals; 3) if the terminal does not receive the downlink channel or signal, the terminal determines that the first COT is not initiated by the network side device.

S204: If the first COT is initiated by the network side device, share the first COT for uplink transmission.

In this embodiment, if the terminal determines that the first COT is initiated by the network-side device; or determines that the first COT used by the network side device can be shared; or determines that there is a first COT initiated by the network side device, S204 can be executed.

It can be understood that, in other embodiments, by executing S202, if the terminal determines that the first COT is not initiated by the network side device; or determines that the first COT is shared by the network side device is belongs to other terminals, that is, the first COT is initiated by other terminals; or determines that the first COT used by the network side device cannot be shared; or determines that there is no first COT initiated by the network side device, the process may end.

In the information COT determination method provided by the embodiment of the present application, the terminal determines, according to the first information, whether the first COT used by the network side device is initiated by the network side device; if it is determined that the first COT is initiated by the network side device, the terminal shares the first COT for uplink transmission to improve communication efficiency.

It is mentioned in embodiment 200 that the first information includes at least one of the following: dedicated signaling, and a downlink channel or signal, which will be described in detail below in two cases.

### Case 1

The first information includes dedicated signaling. The terminal in S202 determines, according to the first information, whether the first COT used by the network side device is initiated by the network side device, which may include at least one of the following 1) to 3).
1) If the terminal receives the dedicated signaling, the terminal determines that the first COT is initiated by the network side device. In this example, the network side device may send dedicated signaling to the terminal in the first COT, and the dedicated signaling may be used to indicate that the first COT is initiated by the network side device, or indicate that the terminal can share the first COT.
2) If the terminal does not receive the dedicated signaling, the terminal determines that the first COT is not initiated by the network side device.
3) If the terminal receives the dedicated signaling, the terminal determines, according to indication information in the dedicated signaling, whether the first COT is initiated by the network side device. In this example, the network side device may send dedicated signaling to the terminal in the first COT, the dedicated signaling includes indication information, and the indication information may be used to indicate whether the first COT is initiated by the network side device, or indicate whether the terminal can share the first COT. Optionally, the indication information is indicated by an indication field in the dedicated signaling, and the dedicated signaling may include downlink control information (Downlink Control Information, DCI) signaling or broadcast signaling.

Optionally, determining, according to the first information, whether the first COT currently used by the network side device is initiated by the network side device in embodiment 200 and each embodiment of case 1 includes: in the case that the terminal can initiate a COT to transmit configuration grant physical uplink shared channel (Configuration Grant PUSCH Physical Uplink Shared Channel, CG PUSCH), determining, according to dedicated signaling, whether the first COT used by the network side device is initiated by the network side device.

In this case, determining, by the terminal when receiving the dedicated signaling, that the first COT is initiated by the network side device in 1) may include: if the terminal receives the dedicated signaling, and the dedicated signaling indicates to cancel transmission of a part of CG PUSCH or cancel transmission of at least one CG PUSCH, determining, by the terminal, that the first COT is initiated by the network side device. In this embodiment, the dedicated signaling may be used to indicate the terminal to cancel transmission of a part of CG PUSCH or cancel transmission of at least one CG PUSCH from the starting position of the fixed frame period (Fixed Frame Period, FFP) of the terminal. The part of CG PUSCH may be a part of one CG PUSCH. For example, a CG PUSCH occupies 5 symbols, and dedicated signaling is used to indicate the terminal to cancel the transmission of the first 2 symbols.

Optionally, if the terminal receives the dedicated signaling and the dedicated signaling indicates to cancel transmission of a part of CG PUSCH or cancel transmission of at least one CG PUSCH, the determining, by the terminal, that the first COT is initiated by the network side device includes: if the terminal receives the dedicated signaling and the dedicated signaling indicates the terminal to cancel transmission of a part of CG PUSCH or cancel transmission of at least one CG PUSCH from the starting position of the fixed frame period FFP of the terminal, determining, by the terminal, that the first COT is initiated by the network side device.

In this embodiment, for example, the dedicated signaling indicates the terminal to cancel transmission of a CG PUSCH at the starting position of the FFP of the terminal, and the terminal considers that the first COT is initiated by the network side device.

Optionally, the dedicated signaling in the foregoing embodiments includes at least one of the following: dynamic uplink grant (dynamic UL grant) signaling, uplink cancellation indication (UL cancellation indication) signaling, slot format indicator (Slot Format Indicator, SFI) signaling, etc.

In this embodiment, the dedicated signaling can be used to implicitly indicate that the first COT is initiated by the network side device, or indicate that the terminal can share the first COT, so as to reduce signaling overheads.

Optionally, the dedicated signaling in the foregoing embodiments may be signaling received at a specific position; where the specific position includes one of the following: the starting position of the FFP (of the network side device); a specific position within the first COT. For the specific position in this example, for example, the duration of the first COT is 5 milliseconds, the specific position may be a position away from the start time of the first COT by 1 millisecond or 2 milliseconds, the middle position of the first COT, and so on.

In one example, the network side device sends a downlink channel or signal at the starting position of its FFP (including the first COT), and all terminals that receive the downlink channel or signal at the starting position of the FFP of the network side device can share the first COT of the network side device.

Optionally, in each embodiment of case 1, if the terminal receives signaling other than the dedicated signaling, the terminal determines that the first COT is not initiated by the network side device; or the terminal cannot determine whether the first COT is initiated by the network side device.

In an example, if the terminal does not receive dedicated signaling in the first COT but receives signaling other than dedicated signaling, the terminal determines that the first COT is not initiated by the network side device.

### Case 2

The first information includes dedicated signaling and a downlink channel or signal. The terminal determines, according to the first information, whether the first COT used by the network side device is initiated by the network side device, including at least one of the following 1) to 3).
1) If the terminal receives the downlink channel or signal but does not receive the dedicated signaling, the terminal determines that the first COT is initiated by the network side device. In this example, the network side device may send dedicated signaling to the terminal in the first COT, and the dedicated signaling may be used to indicate that the first COT is not initiated by the network side device.
2) If the terminal receives the downlink channel or signal and receives the dedicated signaling, the terminal determines that the first COT is not initiated by the network side device. In this example, the network side device may send dedicated signaling to the terminal in the first COT, and the dedicated signaling may be used to indicate that the first COT is not initiated by the network side device.
3) If the terminal does not receive the downlink channel or signal, the terminal determines that the first COT is not initiated by the network side device. In this example, the network side device may send dedicated signaling to the terminal in the first COT, and the dedicated signaling may be used to indicate that the first COT is not initiated by the network side device.

Optionally, each of the foregoing embodiments may further include the following steps: the terminal receives uplink scheduling signaling, where the uplink scheduling signaling is used to schedule an uplink resource, the uplink scheduling signaling includes a COT sharing indicator, and the uplink resource is in the first COT, for example, all uplink resources may be in the first COT, or a part of them may be in the first COT. The uplink scheduling signaling is sent by the network side device in a second COT, and the second COT is before the first COT. The COT sharing indicator is used to indicate whether the terminal can share the COT initiated by the network device. If the network device does not initiate the COT, it may indicate that the terminal cannot share the COT.

In an example, the above embodiment further includes the following step: the terminal ignores the COT sharing indicator.

In the case of ignoring the COT sharing indicator, the method further includes the following steps: if the first COT is not initiated by the network side device and the uplink resource is aligned with the starting position of the FFP of the terminal, the terminal initiates a third COT to perform uplink transmission, so as to improve communication efficiency.

In the case of ignoring the COT sharing indicator, determining, according to the first information, whether the first COT used by the network side device is initiated by the network side device in embodiment 200 includes: in a case that the uplink resource is aligned with the starting position of the FFP of the terminal, determining, according to the first information, whether the first COT used by the network side device is initiated by the network side device. If the first COT used by the network side device is initiated by the network side device, the terminal shares the first COT for uplink transmission.

In the case of ignoring the COT sharing indicator, the method further includes the following steps: if the uplink resource is aligned with the starting position of the FFP of the terminal, the terminal initiates a third COT to perform uplink transmission, so as to improve communication efficiency.

In another example, the method further includes the following steps: if the COT sharing indicator is used to indicate the terminal to prohibit sharing the first COT or to indicate the terminal to initiate a third COT, and the uplink resource is aligned with the starting position of the FFP of the terminal, the terminal initiates the third COT for uplink transmission; or if the COT sharing indicator is used to indicate the terminal to prohibit sharing the first COT or indicate the terminal to initiate a third COT, and the uplink resource is not aligned with the starting position of the FFP of the terminal, the terminal cancels uplink transmission.

In yet another example, the method further includes the following steps: if the COT sharing indicator is used to indicate the terminal to share the first COT and the terminal detects the first COT, sharing the first COT for uplink transmission; or if the COT sharing indicator is used to indicate the terminal to share the first COT and the terminal fails to detect the first COT, canceling uplink transmission.

In order to describe the COT determination method provided by the embodiment of the present application in detail, the following will describe in conjunction with several specific embodiments.

### Embodiment 1

In this embodiment, the terminal (such as UE) determines, through dedicated signaling (dedicated signaling), whether the COT of the network side device (such as gNB) can be shared or determines whether there is a COT initiated by the network side device (gNB-initiated COT).

The dedicated signaling can be carried in DCI, for example, a group common PDCCH (Group Common Physical Downlink Control Channel, GC-PDCCH), terminal-specific DCI (UE-specific DCI), or the like; can also be carried in broadcast signaling, for example, a synchronization signal and PBCH block (Synchronization Signal and PBCH Block, SSB).

The dedicated signaling can be implemented through 1 bit in the DCI or SSB, so that the UE determines, according to the value of the bit, whether the COT of the gNB can be shared or whether there is a gNB-initiated COT. For example, 1 means that the COT of the gNB can be shared or 1 means that the COT used by the gNB to send signaling is a gNB initiate COT; 0 means that the COT of the gNB cannot be shared or that the COT shared by the gNB is initiated by other UEs.

In this embodiment, regardless of whether the gNB initiates the COT, an indication can be sent to the UE with uplink transmission, so as to ensure that each UE can distinguish whether it can share the COT of the gNB.

In addition, the dedicated signaling may also be signaling sent at a specific position, for example, downlink signaling sent at the starting position of the FFP of the gNB. All UEs that receive signaling at this position can share the COT of the gNB.

In order to send signaling to as many UEs as possible in a limited position, the dedicated signaling can be group common signaling or broadcast signaling sent at the starting position of the FFP, so as to reduce signaling overheads.

Further, the dedicated signaling can also be sent at a specific position in the COT, indicating that the terminal can share the COT of the gNB. When the gNB shares the COT of the UE, the gNB cannot send corresponding signaling in these specific positions.

### Embodiment 2

For a UE transmitting a CG PUSCH, when the CG PUSCH resource is aligned with the starting position of the FFP of the UE, the UE initiates COT for uplink transmission by default, and the UE can determine, according to the indication of the received dedicated signaling, whether to share the COT of gNB for uplink transmission.

The dedicated signaling may be dynamic uplink grant signaling, uplink cancellation indication signaling, time slot format indicator signaling, and the like. The dedicated signaling may indicate the UE to cancel transmission of a part of CG PUSCH or cancel transmission of at least one CG PUSCH from the starting position of the FFP

For example, if receiving dynamic uplink grant signaling indicating the UE to cancel the first CG PUSCH transmission, the UE shares the COT of the gNB and performs DG PUSCH transmission (the DG PUSCH is indicated by the dynamic uplink grant signaling) and subsequent CG PUSCH transmission according to indication of the dynamic uplink grant signaling. If the UE does not receive the indication, the UE performs LBT in the idle period (idle period) of its own FFP. If the channel is empty, it initiates a COT to transmit a CG PUSCH.

In addition, if the uplink cancellation indication signaling or slot format indicator signaling received by the UE indicate the UE to cancel transmission of a part of CG PUSCH or cancel transmission of at least one CG PUSCH starting from the starting position of the FFP, the UE shares the COT of the gNB to transmit the remaining CG PUSCH.

### Embodiment 3

The UE determines, through both the downlink channel or signal and dedicated signaling, whether the COT of the gNB can be shared.

When the UE detects any downlink channel or signal, the UE assumes that the COT of the gNB can be shared. If the UE does not detect dedicated signaling, the UE can share the COT of the base station. If the UE detects dedicated signaling, the UE cannot share the COT of the base station.

The dedicated signaling is used to notify the UE that sharing of the COT is prohibited, or that the current gNB does not initiate the COT. Likewise, the dedicated signaling may be a specific GC-PDCCH, or broadcast signaling. In this embodiment, if the gNB initiates the COT by itself, it does not need to send the dedicated signaling to the UE.

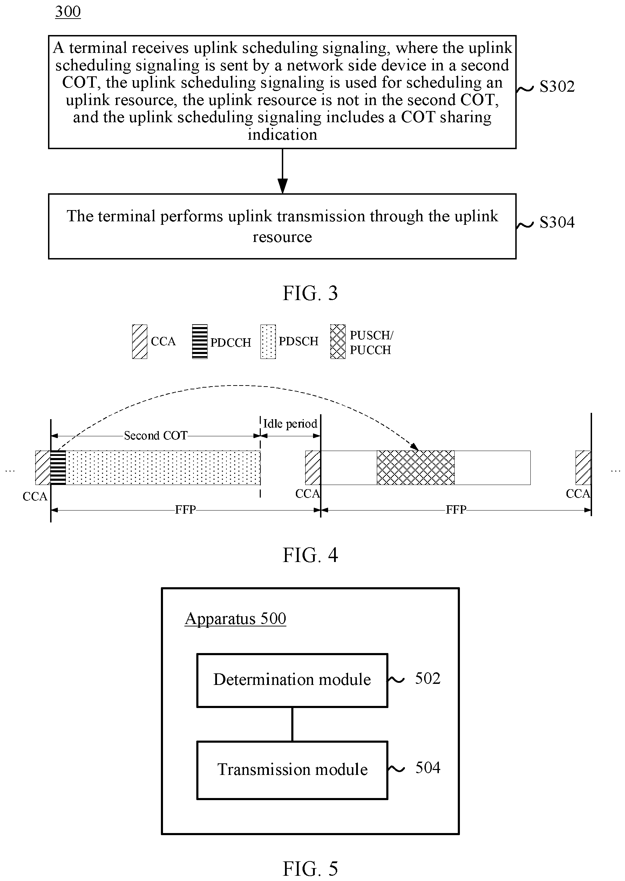

The COT determination method according to the embodiment of the present application has been described in detail above with reference to FIG. 2. An uplink transmission method according to another embodiment of the present application will be described in detail below with reference to FIG. 3.

FIG. 3 is a schematic diagram of an implementation flow of an uplink transmission method according to an embodiment of the present application, which can be applied to a terminal. As shown in FIG. 3, the method 300 includes the following steps.

S302: A terminal receives uplink scheduling signaling, where the uplink scheduling signaling is sent by a network side device in a second COT, the uplink scheduling signaling is used for scheduling an uplink resource, the uplink resource is not in the second COT, and the uplink scheduling signaling includes a COT sharing indicator.

The COT sharing indicator is used to indicate whether the terminal can share the COT initiated by the network device. If the network device does not initiate the COT, it may indicate that the terminal cannot share the COT.

S304: The terminal performs uplink transmission on the uplink resource.

In this embodiment, the terminal can perform uplink transmission according to a COT sharing indicator; can also use the COT determination method in the previous embodiment to determine whether the network side device initiates COT, and then according to whether the network side device initiates COT and the COT sharing indicator and according to a rule, perform uplink transmission on the uplink resource.

In the uplink transmission method provided by the embodiment of the present application, the position of the uplink resource is not within the second COT sent by the uplink grant signaling, but the uplink grant signaling carries the COT sharing indicator, and the terminal can use the COT sharing indicator or the like to perform uplink transmission on the uplink resource, to improve communication efficiency.

Optionally, as an embodiment, the method further includes the following step: the terminal ignores the COT sharing indicator.

Optionally, as an embodiment, in the case of ignoring the COT sharing indicator, the method further includes: if the first COT used by the network side device is not initiated by the network side device, and the uplink resource is aligned with the starting position of the FFP of the terminal, the terminal initiates a third COT for uplink transmission. In this embodiment, all of the uplink resources may be in the first COT, or a part of them may be in the first COT.

Optionally, as an embodiment, in the case of ignoring the COT sharing indicator, the method further includes: in a case that the uplink resource is not aligned with the starting position of the FFP of the terminal, the terminal determines, according to the first information, whether the first COT used by the network side device is initiated by the network side device, and if the first COT used by the network side device is initiated by the network side device, the terminal shares the first COT for uplink transmission; where the first information may include at least one of the following: dedicated signaling and a downlink channel or signal.

Optionally, as an embodiment, in the case of ignoring the COT sharing indicator, the method further includes: if the uplink resource is aligned with the starting position of the FFP of the terminal, the terminal initiates a third COT for uplink transmission.

Optionally, as an embodiment, the method further includes: if the COT sharing indicator is used to indicate the terminal to prohibit sharing the COT or to indicate the terminal to initiate a third COT, and the uplink resource is aligned with the starting position of the FFP of the terminal, the terminal initiates the third COT for uplink transmission; or if the COT sharing indicator is used to indicate the terminal to prohibit sharing the COT or indicate the terminal to initiate a third COT, and the uplink resource is not aligned with the starting position of the FFP of the terminal, the terminal cancels uplink transmission.

Optionally, as an embodiment, the method further includes: if the COT sharing indicator is used to indicate the terminal to share the first COT initiated by the network side device and the terminal detects the first COT, sharing the first COT for uplink transmission; or if the COT sharing indicator is used to indicate the terminal to share the first COT initiated by the network side device and the terminal fails to detect the first COT, canceling uplink transmission.

In order to describe the uplink transmission method provided by the embodiment of the present application in detail, a specific embodiment will be used for description below.

### Embodiment 4

This embodiment mainly introduces cross-COT scheduling, that is, the gNB schedules the UE to perform uplink transmission outside the second COT through the PDCCH in the second COT, and schedules a physical uplink control channel (Physical Uplink Control Channel, PUCCH) or a physical uplink shared channel ( Physical Uplink Shared Channel, PUSCH) or other uplink channels or signals. The PDCCH also includes a COT sharing indicator, which is used to indicate that whether the terminal can share the COT initiated by the gNB.

As shown in FIG. 4, FIG. 4 schematically shows two FFPs, the second COT is located in the former FFP, and uplink transmission resources are located in the latter FFP. In the second COT, the gNB schedules, through the PDCCH, uplink transmission resources such as a PUCCH or a PUSCH of the UE outside the second COT, and in the second COT, the gNB also sends the PDSCH.

In this scenario, the UE can perform transmission according to one of the following methods according to the COT sharing indicator sent by the gNB.

Method 1. UE ignores the COT sharing indicator of the gNB, and determines, according to the method in embodiment 1, 2 or 3 in the next FFP of the gNB, whether the gNB initiates the COT. If the gNB initiates the COT, the UE shares the COT of gNB; otherwise, if the gNB does not initiate the COT and the uplink transmission resource of the UE is aligned with the start edge of the FFP of the UE, the UE initiates the COT for transmission by itself. If the gNB does not initiate the COT and the UE does not initiate the COT, the PUCCH or PUSCH transmission is canceled.

Method 2. UE ignores the COT sharing indicator of the gNB, and determines, according to whether the scheduled uplink transmission resource is aligned with the starting position of the FFP of the UE, whether to initiate a COT by itself. If the two are aligned, the UE initiates the COT by itself; if the two are not aligned, the UE can determine, according to the method in embodiment 1, 2 or 3, whether the gNB has initiated the COT, and if the gNB initiates the COT, the UE shares the COT of the gNB for PUCCH or PUSCH transmission.

Method 3. The COT sharing indicator is used to indicate the UE to prohibit sharing the COT, or to indicate the UE to initiate COT by itself, and the uplink transmission resource scheduled by the gNB is aligned with the edge of the FFP of the UE, then the UE initiates a COT for PUCCH or PUSCH transmission according to the COT sharing indicator.

Method 4. The COT sharing indicator is used to indicate that the UE can share the COT. The UE can determine, according to the method in embodiment 1, 2 or 3, whether the gNB has initiated the COT. If the UE detects the COT initiated by the gNB (for example, the first COT is detected ), the COT of the gNB is shared for transmission; otherwise, the UE cancels the transmission.

FIG. 5 is a schematic structural diagram of a COT indication apparatus according to an embodiment of the present application, and the apparatus may correspond to a terminal in other embodiments. As shown in FIG. 5, an apparatus 500 includes the following modules:
a determination module 502, configured to determine, according to first information, whether a first COT used by a network side device is initiated by the network side device; and
a transmission module 504, configured to: if the first COT is initiated by the network side device, share the first COT for uplink transmission.

In this embodiment of the present application, the COT indication apparatus determines, according to the first information, whether the first COT used by the network side device is initiated by the network side device; if it is determined that the first COT is initiated by the network side device, shares the first COT for uplink transmission to improve communication efficiency.

Optionally, as an embodiment, the first information includes dedicated signaling, and the determination module 502 is configured to perform at least one of the following: if receiving the dedicated signaling, determine that the first COT is initiated by the network side device; if not receiving the dedicated signaling, determine that the first COT is not initiated by the network side device; and if receiving the dedicated signaling, determine, according to indication information in the dedicated signaling, whether the first COT is initiated by the network side device.

Optionally, as an embodiment, the determination module is configured to: in a case that the apparatus can initiate a COT to transmit a CG PUSCH, determine, according to dedicated signaling, whether the first COT used by the network side device initiated by the network side device.

Optionally, as an embodiment, if the dedicated signaling is received, determining, that the first COT is initiated by the network side device includes: if the dedicated signaling is received, and the dedicated signaling indicates to cancel transmission of a part of CG PUSCH or cancel transmission of at least one CG PUSCH, determining that the first COT is initiated by the network side device.

Optionally, as an embodiment, if the dedicated signaling is received and the dedicated signaling indicates to cancel transmission of a part of CG PUSCH or cancel transmission of at least one CG PUSCH, the determining that the first COT is initiated by the network side device includes: the dedicated signaling is received, and the dedicated signaling indicates the apparatus to cancel transmission of a part of CG PUSCH or cancel transmission of at least one CG PUSCH from the starting position of the FFP of the apparatus, and determining that the first COT is initiated by the network side device.

Optionally, as an embodiment, the dedicated signaling includes at least one of the following: dynamic uplink grant signaling, uplink cancellation indicator signaling, and SFI signaling.

Optionally, as an embodiment, the dedicated signaling is signaling received at a specific position; where the specific position includes one of the following: a starting position of the FFP; and a specific position in the first COT.

Optionally, as an embodiment, the indication information is indicated by an indication field in the dedicated signaling, where the dedicated signaling includes DCI signaling or broadcast signaling.

Optionally, as an embodiment, when the apparatus receives signaling other than the dedicated signaling, the apparatus determines that the first COT is not initiated by the network side device; or the apparatus cannot determine whether the first COT is initiated by the network side device.

Optionally, as an embodiment, the first information includes dedicated signaling and the downlink channel or signal, and the determination module 502 is configured to perform at least one of the following: if the downlink channel or signal is received but dedicated signaling is not received, determining that the first COT is initiated by the network side device; if the downlink channel or signal is received and the dedicated signaling is received, determining that the first COT is not initiated by the network side device; and if the downlink channel or signal is not received, determine that the first COT is not initiated by the network side device.

Optionally, as an embodiment, the dedicated signaling is used to indicate that the first COT is not initiated by the network side device.

Optionally, as an embodiment, the transmission module 504 is further configured to: receive uplink scheduling signaling, where the uplink scheduling signaling is used to schedule an uplink resource, the uplink scheduling signaling includes a COT sharing indicator, and the uplink resource is in the first COT. The uplink scheduling signaling is sent by the network side device in a second COT, and the second COT is before the first COT.

Optionally, as an embodiment, the transmission module 504 is further configured to: ignore the COT sharing indicator.

Optionally, as an embodiment, the transmission module 504 is further configured to: if the first COT is not initiated by the network side device, and the uplink resource is aligned with the starting position of the FFP of the apparatus, initiate a third COT for uplink transmission.

Optionally, as an embodiment, the determination module 502 may be configured to: in a case that the uplink resource is not aligned with the starting position of the FFP of the apparatus, determine, according to the first information, whether the first COT used by the network side device is initiated by the network side device.

Optionally, as an embodiment, the transmission module 504 is further configured to: initiate a third COT for uplink transmission if the uplink resource is aligned with the starting position of the FFP of the apparatus.

Optionally, as an embodiment, the transmission module 504 is further configured to: if the COT sharing indicator is used to indicate the apparatus to prohibit sharing the first COT or to indicate the apparatus to initiate a third COT, and the uplink resource is aligned with the starting position of the FFP of the apparatus, initiate the third COT for uplink transmission; or if the COT sharing indicator is used to indicate the apparatus to prohibit sharing the first COT or indicate the apparatus to initiate a third COT, and the uplink resource is not aligned with the starting position of the FFP of the apparatus, cancel uplink transmission.

Optionally, as an embodiment, the transmission module 504 is further configured to: if the COT sharing indicator is used to indicate the apparatus to share the first COT and the apparatus detects the first COT, share the first COT for uplink transmission; or if the COT sharing indicator is used to indicate the apparatus to share the first COT and the apparatus fails to detect the first COT, cancel uplink transmission.

The apparatus 500 according to the embodiments of this application may correspond to the procedures of the method 200 in the embodiments of this application, and the units/modules in the apparatus 500 and the foregoing operations and/or functions are respectively for implementing the corresponding procedures of the method 200 and can achieve a same or equivalent technical effect. For brevity, details are not described herein again.

The COT indication apparatus in the embodiments of the present application may be an apparatus, or may be a component, an integrated circuit, or a chip in a terminal. The apparatus may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The COT indication apparatus in the embodiment of the present application may be a device with an operating system. The operating system may be an Android (Android) operating system, may be an iOS operating system, or may be another possible operating system. This is not specifically limited in this embodiment of this application.

The COT indication apparatus according to the embodiments of the present disclosure can implement the processes in the method embodiments in FIG. 2, and achieve the same technical effect. To avoid repetition, details are not described herein again.

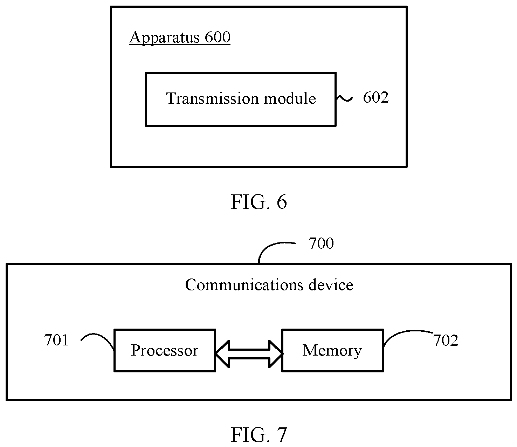

FIG. 6 is a schematic structural diagram of an uplink transmission apparatus according to an embodiment of the present application, and the apparatus may correspond to a terminal in other embodiments. As shown in FIG. 6, an apparatus 600 includes the following modules:

The transmission module 602 may be configured to receive uplink scheduling signaling, where the uplink scheduling signaling is sent by a network side device in a second COT, the uplink scheduling signaling is used for scheduling an uplink resource, the uplink resource is not in the second COT, and the uplink scheduling signaling includes a COT sharing indicator.

The transmission module 602 may also be configured to perform uplink transmission on the uplink resource.

In the embodiment of the present application, the position of the uplink resource is not within the second COT sent by the uplink grant signaling, but the uplink grant signaling carries the COT sharing indicator, and the terminal can use the COT sharing indicator or the like to perform uplink transmission on the uplink resource, to improve communication efficiency.

Optionally, as an embodiment, the transmission module 602 may also be configured to ignore the COT sharing indicator.

Optionally, as an embodiment, the transmission module 602 may be further configured to: if the first COT used by the network side device is not initiated by the network side device, and the uplink resource is aligned with the starting position of the FFP of the apparatus, initiate a third COT for uplink transmission.

Optionally, as an embodiment, the apparatus further includes a determination module, configured to: in a case that the uplink resource is not aligned with the starting position of the FFP of the apparatus, determine, according to the first information, whether the first COT used by the network side device is initiated by the network side device. The first information can include at least one of the following: dedicated signaling, and a downlink channel or signal.

Optionally, as an embodiment, the transmission module 602 may be further configured to: initiate a third COT for uplink transmission if the uplink resource is aligned with the starting position of the FFP of the apparatus.

Optionally, as an embodiment, the transmission module 602 may be further configured to: if the COT sharing indicator is used to indicate the apparatus to prohibit sharing the COT or to indicate the apparatus to initiate a third COT, and the uplink resource is aligned with the starting position of the FFP of the apparatus, initiate the third COT for uplink transmission; or if the COT sharing indicator is used to indicate the apparatus to prohibit sharing the COT or indicate the apparatus to initiate a third COT, and the uplink resource is not aligned with the starting position of the FFP of the apparatus, cancel uplink transmission.

Optionally, as an embodiment, the transmission module 602 may be further configured to: if the COT sharing indicator is used to indicate the apparatus to share the first COT initiated by the network side device and the apparatus detects the first COT, share the first COT for uplink transmission; or if the COT sharing indicator is used to indicate the apparatus to share the first COT initiated by the network side device and the apparatus fails to detect the first COT, cancel uplink transmission.

The apparatus 600 according to the embodiments of this application may correspond to the procedures of the method 300 in the embodiments of this application, and the units/modules in the apparatus 600 and the foregoing operations and/or functions are respectively for implementing the corresponding procedures of the method 300 and can achieve a same or equivalent technical effect. For brevity, details are not described herein again.

Optionally, as shown in FIG. 7, an embodiment of the present application further provides a communication device 700, including a processor 701, a memory 702, and a program or an instruction stored in the memory 702 and executable on the processor 701. For example, when the communication device 700 is a terminal, when the program or instruction is executed by the processor 701, each process of the embodiment of the foregoing COT determination method is performed, or each process of the embodiment of the foregoing uplink transmission method is performed, and the same technical effect can be achieved. To avoid repetition, details are not described herein again.

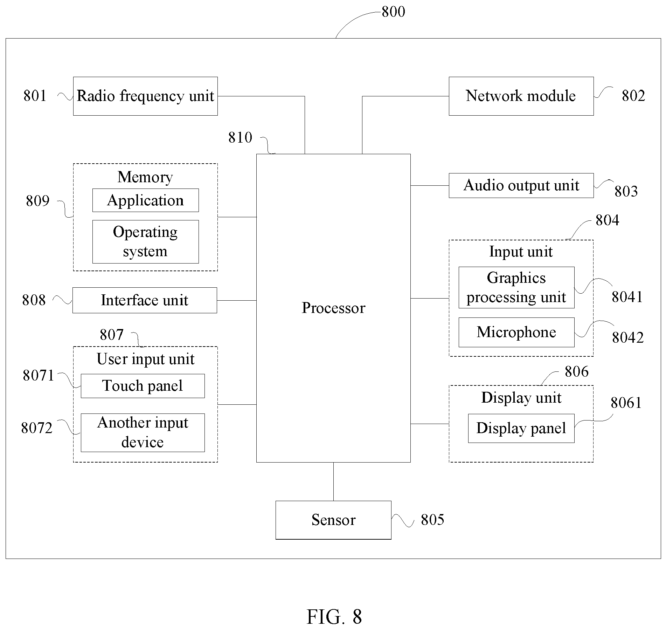

FIG. 8 is a schematic diagram of a hardware structure of a terminal according to an embodiment of this application.

A terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061. Optionally, the display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. Another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area, where the program or instruction storage area may store an operating system, an application program or instructions required by at least one function (such as a sound playback function, an image playback function, etc.) and the like. In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communications, for example, a baseband processor. It can be understood that, alternatively, the modem processor may not be integrated into the processor 810.

The processor 810 is configured to determine, according to first information, whether a first COT used by a network side device is initiated by the network side device; and the radio frequency unit 801 is configured to: if the first COT is initiated by the network side device, share the first COT for uplink transmission.

Alternatively, the radio frequency unit 801 is configured to receive uplink scheduling signaling, where the uplink scheduling signaling is sent by a network side device in a second COT, the uplink scheduling signaling is used for scheduling an uplink resource, the uplink resource is not in the second COT, and the uplink scheduling signaling includes a COT sharing indicator; and perform uplink transmission on the uplink resource.

In this embodiment of the present application, the terminal determines, according to the first information, whether the first COT used by the network side device is initiated by the network side device; if it is determined that the first COT is initiated by the network side device, the terminal shares the first COT for uplink transmission to improve communication efficiency.

In the embodiment of the present application, the position of the uplink resource is not within the second COT sent by the uplink grant signaling, but the uplink grant signaling carries the COT sharing indicator, and the terminal can use the COT sharing indicator or the like to perform uplink transmission on the uplink resource, to improve communication efficiency.

The terminal 800 provided in the embodiment of the present application can also implement the processes of the COT determination method embodiment or the uplink transmission method embodiment described above, and can achieve the same technical effect. To avoid repetition, details are not repeated here.

An embodiment of the present application further provides a readable storage medium. The readable storage medium stores a program or an instruction, and when the program or the instruction is executed by a processor, the various processes of the foregoing COT determination method embodiment or the foregoing uplink transmission method embodiment is performed and the same technical effects can be achieved. To avoid repetition, details are not described herein again.

The processor is the processor in the terminal described in the above embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to run programs or instructions to implement each process of the foregoing COT determination method embodiment or the foregoing uplink transmission method embodiment and the same technical effects can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network side device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A COT determination method, comprising:
determining, by a terminal according to first information, whether a first channel occupancy time COT used by a network side device is initiated by the network side device; and
if the first COT is initiated by the network side device, sharing the first COT for uplink transmission.

2. The method according to claim 1, wherein the first information comprises dedicated signaling, the determining, by a terminal according to first information, whether a first COT used by a network side device is initiated by the network side device comprises at least one of following:
if the terminal receives the dedicated signaling, determining, by the terminal, that the first COT is initiated by the network side device;
if the terminal does not receive the dedicated signaling, determining, by the terminal, that the first COT is not initiated by the network side device; and
if the terminal receives the dedicated signaling, determining, by the terminal according to indication information in the dedicated signaling, whether the first COT is initiated by the network side device.

3. The method according to claim 1, wherein the determining, according to first information, whether a first COT used by a network side device is initiated by the network side device comprises:
in a case that the terminal can initiate a COT to transmit a configuration grant physical uplink shared channel CG PUSCH, determining, according to dedicated signaling, whether the first COT used by the network side device is initiated by the network side device.

4. The method according to claim 3, wherein if the terminal receives the dedicated signaling, the determining, by the terminal, that the first COT is initiated by the network side device comprises:
if the terminal receives the dedicated signaling, and the dedicated signaling indicates to cancel transmission of a part of CG PUSCH or cancel transmission of at least one CG PUSCH, determining, by the terminal, that the first COT is initiated by the network side device.

5. The method according to claim 4, wherein the determining, by the terminal if the terminal receives the dedicated signaling, and the dedicated signaling indicates to cancel transmission of a part of CG PUSCH or cancel transmission of at least one CG PUSCH, that the first COT is initiated by the network side device comprises:
if the terminal receives the dedicated signaling and the dedicated signaling indicates the terminal to cancel transmission of a part of CG PUSCH or cancel transmission of at least one CG PUSCH from the starting position of the fixed frame period FFP of the terminal, determining, by the terminal, that the first COT is initiated by the network side device.

6. The method according to any one of claims 2 to 5, wherein the dedicated signaling comprises at least one of following:
dynamic uplink grant signaling, uplink cancellation indication signaling, and time slot format indicator SFI signaling.

7. The method according to any one of claims 2 to 5, wherein the dedicated signaling is signaling received at a specific position;
wherein the specific position comprises one of following: a starting position of the FFP; and a specific position in the first COT.

8. The method according to claim 2, wherein the indication information is indicated by an indication field in the dedicated signaling, wherein the dedicated signaling comprises downlink control information DCI signaling or broadcast signaling.

9. The method according to claim 2, wherein if the terminal receives signaling other than the dedicated signaling,
determining, by the terminal, that the first COT is not initiated by the network side device; or
the terminal cannot determine whether the first COT is initiated by the network side device.

10. The method according to claim 1, wherein the first information comprises dedicated signaling and a downlink channel or signal, the determining, by a terminal according to first information, whether a first COT used by a network side device is initiated by the network side device comprises at least one of following:
if the terminal receives the downlink channel or signal but does not receive the dedicated signaling, determining, by the terminal, that the first COT is initiated by the network side device;
if the terminal receives the downlink channel or signal and receives the dedicated signaling, determining, by the terminal, that the first COT is not initiated by the network side device; and
if the terminal does not receive the downlink channel or signal, determining, by the terminal, that the first COT is not initiated by the network side device.

11. The method according to claim 10, wherein the dedicated signaling is used to indicate that the first COT is not initiated by the network side device.

12. The method according to claim 1, wherein the method further comprises:
receiving, by the terminal, uplink scheduling signaling, wherein the uplink scheduling signaling is used to schedule an uplink resource, the uplink scheduling signaling comprises a COT sharing indicator, and the uplink resource is in the first COT;
wherein the uplink grant signaling is sent by the network side device in a second COT, and the second COT is before the first COT.

13. The method according to claim 12, wherein the method further comprises:
ignoring, by the terminal, the COT sharing indicator.

14. The method according to claim 13, wherein the method further comprises:
if the first COT is not initiated by the network side device, and the uplink resource is aligned with a starting position of the FFP of the terminal, initiating, by the terminal, a third COT for uplink transmission.

15. The method according to claim 13, wherein the determining, according to first information, whether a first COT used by a network side device is initiated by the network side device comprises:
in a case that the uplink resource is not aligned with the starting position of the FFP of the terminal, determining, according to the first information, whether the first COT used by the network side device is initiated by the network side device.

16. The method according to claim 13, wherein the method further comprises:
if the uplink resource is aligned with the starting position of the FFP of the terminal, initiating, by the terminal, a third COT for uplink transmission.

17. The method according to claim 12, wherein the method further comprises:
if the COT sharing indicator is used to indicate the terminal to prohibit sharing the first COT or to indicate the terminal to initiate a third COT, and the uplink resource is aligned with the starting position of the FFP of the terminal, initiating, by the terminal, the third COT for uplink transmission; or
if the COT sharing indicator is used to indicate the terminal to prohibit sharing the first COT or to indicate the terminal to initiate a third COT, and the uplink resource is not aligned with the starting position of the FFP of the terminal, canceling uplink transmission.

18. The method according to claim 12, wherein the method further comprises:
if the COT sharing indicator is used to indicate the terminal to share the first COT and the terminal detects the first COT, sharing the first COT for uplink transmission; or
if the COT sharing indicator is used to indicate the terminal to share the first COT and the terminal fails to detect the first COT, canceling uplink transmission.

19. An uplink transmission method, comprising:
receiving, by a terminal, uplink scheduling signaling, wherein the uplink scheduling signaling is sent by a network side device in a second COT, the uplink scheduling signaling is used for scheduling an uplink resource, the uplink resource is not in the second COT, and the uplink scheduling signaling comprises a COT sharing indicator; and
performing, by the terminal, uplink transmission on the uplink resource.

20. The method according to claim 19, wherein the method further comprises:
ignoring, by the terminal, the COT sharing indicator.

21. The method according to claim 20, wherein the method further comprises:
if a first COT used by the network side device is not initiated by the network side device, and the uplink resource is aligned with the starting position of the FFP of the terminal, initiating, by the terminal, a third COT for uplink transmission.

22. The method according to claim 20, wherein the method further comprises:
in a case that the uplink resource is not aligned with the starting position of the FFP of the terminal, determining, according to the first information, whether the first COT used by the network side device is initiated by the network side device.

23. The method according to claim 20, wherein the method further comprises:
if the uplink resource is aligned with the starting position of the FFP of the terminal, initiating, by the terminal, a third COT for uplink transmission.

24. The method according to claim 19, wherein the method further comprises:
if the COT sharing indicator is used to indicate the terminal to prohibit sharing the COT or to indicate the terminal to initiate a third COT, and the uplink resource is aligned with the starting position of the FFP of the terminal, initiating, by the terminal, the third COT for uplink transmission; or
if the COT sharing indicator is used to indicate the terminal to prohibit sharing the COT or to indicate the terminal to initiate a third COT, and the uplink resource is not aligned with the starting position of the FFP of the terminal, canceling uplink transmission.

25. The method according to claim 19, wherein the method further comprises:
if the COT sharing indicator is used to indicate the terminal to share the first COT initiated by the network side device and the terminal detects the first COT, sharing the first COT for uplink transmission; or
if the COT sharing indicator is used to indicate the terminal to share the first COT initiated by the network side device and the terminal fails to detect the first COT, canceling uplink transmission.

26. A COT determination apparatus, comprising:
a determination module, configured to determine, according to first information, whether a first COT used by a network side device is initiated by the network side device; and
a transmission module, configured to: if the first COT is initiated by the network side device, share the first COT for uplink transmission.

27. The apparatus according to claim 26, wherein the first information comprises dedicated signaling, and the determination module is configured to perform at least one of following:
if receiving the dedicated signaling, determining that the first COT is initiated by the network side device;
if not receiving the dedicated signaling, determining that the first COT is not initiated by the network side device; and
if receiving the dedicated signaling, determining, according to indication information in the dedicated signaling, whether the first COT is initiated by the network side device.

28. The apparatus according to claim 27, wherein the determination module is configured to: in a case that the apparatus can initiate a COT to transmit a CG PUSCH, determine, according to dedicated signaling, whether the first COT used by the network side device initiated by the network side device.

29. The apparatus according to claim 28, wherein if the dedicated signaling is received, the determining, that the first COT is initiated by the network side device comprises:
if the dedicated signaling is received, and the dedicated signaling indicates to cancel transmission of a part of CG PUSCH or cancel transmission of at least one CG PUSCH, determining that the first COT is initiated by the network side device.

30. The apparatus according to claim 26, wherein the first information comprises dedicated signaling and a downlink channel or signal, and the determination module is configured to perform at least one of following:
if the downlink channel or signal is received but the dedicated signaling is not received, determining that the first COT is initiated by the network side device;
if receiving the downlink channel or signal is received and the dedicated signaling is received, determining that the first COT is not initiated by the network side device; and
if the downlink channel or signal is not received, determining that the first COT is not initiated by the network side device.

31. The apparatus of claim 26, wherein the transmission module is further configured to:
receive uplink scheduling signaling, wherein the uplink scheduling signaling is used to schedule an uplink resource, the uplink scheduling signaling comprises a COT sharing indicator, and the uplink resource is in the first COT;
wherein the uplink grant signaling is sent by the network side device in a second COT, and the second COT is before the first COT.

32. An uplink transmission apparatus, comprising:
a transmission module, configured to receive uplink scheduling signaling, wherein the uplink scheduling signaling is sent by a network side device in a second COT, the uplink scheduling signaling is used for scheduling an uplink resource, the uplink resource is not in the second COT, and the uplink scheduling signaling comprises a COT sharing indicator; and
the transmission module is further configured to perform uplink transmission on the uplink resource.

33. Aterminal, comprising a processor, a memory, and a program or instruction stored on the memory and executable on the processor, wherein when the program or instruction is executed by the processor, the COT determination method according to any one of claims 1 to 18 or the uplink transmission method according to any one of claims 19 to 25 is implemented.

34. A readable storage medium, storing a program or an instruction on the readable storage medium, wherein when the program or instruction is executed by a processor, the COT determination method according to any one of claims 1 to 18 or the uplink transmission method according to any one of claims 19 to 25 is implemented.
